# EUROPÄISCHE PATENTANMELDUNG

(11) **EP 1 426 672 A1**
(43) Veröffentlichungstag der Anmeldung: **09.06.2004**
(21) Anmeldenummer: 03027680.2
(22) Anmeldetag: 03.12.2003
(51) Int. Cl.: F16M 11/12, F16M 13/02, F16B 2/06, F16B 2/16

(54) **Geräteklemme**

(30) Priorität: 03.12.2002 DE 20218774 U
(71) Anmelder: Barkey, Volker, D-33619 Bielefeld (DE)
(72) Erfinder: Barkey, Volker, D-33619 Bielefeld (DE)
(74) Vertreter: TER MEER STEINMEISTER & PARTNER GbR

(57) **Zusammenfassung**

Geräteklemme mit einem Klemmstück (10) mit einem seitlich eintretenden Schlitz (12) zur Aufnahme eines Stangenprofils, an dem die Geräteklemme zu befestigen ist, und mit einer quer zum Schlitz gerichteten, in den Schlitz einschraubbaren Klemmschraube, wobei an dem Klemmstück ein drehbarer, in mehreren Winkelstellungen verrastbarer Geräteträger (26) angebracht ist.

## Beschreibung

Die Erfindung betrifft eine Geräteklemme mit einem Klemmstück mit einem seitlich eintretenden Schlitz zur Aufnahme eines Stangenprofils, an dem die Geräteklemme zu befestigen ist, und mit einer quer zu dem Schlitz gerichteten, in den Schlitz eindrehbaren Klemmschraube.

Derartige Klemmen sind bekannt. Sie gestatten die Anbringung von medizinischem oder Laborgerät an Stativstangen oder waagerechten Normschienen in einem Krankenhaus. Um dieses Gerät in verschiedenen Orientierungen anordnen zu können, sind Geräteklemmen notwendig, die gewisse Verstellbewegungen ermöglichen. Diese Verstellbewegungen zur Einstellung der Position des Geräts sind jedoch bei den bekannten Geräteklemmen verhältnismäßig aufwändig und darüber hinaus labil.

Der Erfindung liegt daher die Aufgabe zugrunde, eine Geräteklemme der obigen Art zu schaffen, die es gestattet, ein von der Geräteklemme aufgenommenes Gerät in einfacher Weise in verschiedene stabile Stellungen zu bringen.

Diese Aufgabe wird bei einer Geräteklemme der obigen Art dadurch gelöst, dass an dem Klemmstück ein einstellbarer, in mehreren Winkellagen verrastbarer Geräteträger angebracht ist.

Der Geräteträger ist vorzugsweise drehbar an dem Klemmstück gelagert. Er weist vorzugsweise Gewindebohrungen auf, an denen medizinische Geräte oder Halterungsteile für diese durch Verschraubung befestigt werden können.

Der Geräteträger ist vorzugsweise in seiner Drehung in Bezug auf das Klemmstück in Winkelschritten von 90° verrastbar. Zur Verrastung können federnde Rastkugeln verwendet werden.

Das Klemmstück weist vorzugsweise auf der dem Schlitz gegenüberliegenden Seite eine Eindrehung auf, in der sich der Geräteträger befindet. Das Klemmstück kann insgesamt zylindrisch sein, und der Schlitz kann von der einen Stirnseite und die Eindrehung von der anderen Stirnseite in das Klemmstück eintreten.

Das erfindungsgemäße Klemmstück eignet sich insbesondere zur Anbringung an zylindrischen Stangenprofilen, die sicher auf der keilförmig zusammenlaufenden Seite des Schlitzes zu erfassen sind. Grundsätzlich ist es jedoch auch möglich, das Klemmstück an anderen Profilquerschnitten anzubringen.

Die hier gewählte Bezeichnung "Geräteklemme" soll andeuten, dass die erfindungsgemäße Klemme insbesondere im Bereich der Medizin zum Anklemmen von medizinischen Geräten an Stative oder Normschienen geeignet ist. Eine Verwendung in anderen Bereichen soll jedoch nicht ausgeschlossen werden. Insbesondere bietet sich die Labortechnik für eine Verwendung der Klemme an. Einsätze auf anderen beliebigen Gebieten sind nicht ausgeschlossen.

Im folgenden werden bevorzugte Ausführungsbeispiele anhand der beigefügten Zeichnungen näher erläutert.
- Fig. 1: ist ein Axialschnitt eines Klemmstücks mit einem insgesamt zylindrischen Korpus;
- Fig. 2: ist eine Ansicht auf die Stirnseite des Korpus von unten in Fig. 1;
- Fig. 3: zeigt eine Stirnansicht des Klemmstücks von oben in Fig. 1;
- Fig. 4: zeigt eine Draufsicht auf einen Geräteträger;
- Fig. 5: ist eine Ansicht auf den Geräteträger von unten in Fig. 4;
- Fig. 6: veranschaulicht das Zusammenfügen eines Klemmstücks und eines Geräteträgers nach Art einer Explosionsdarstellung.

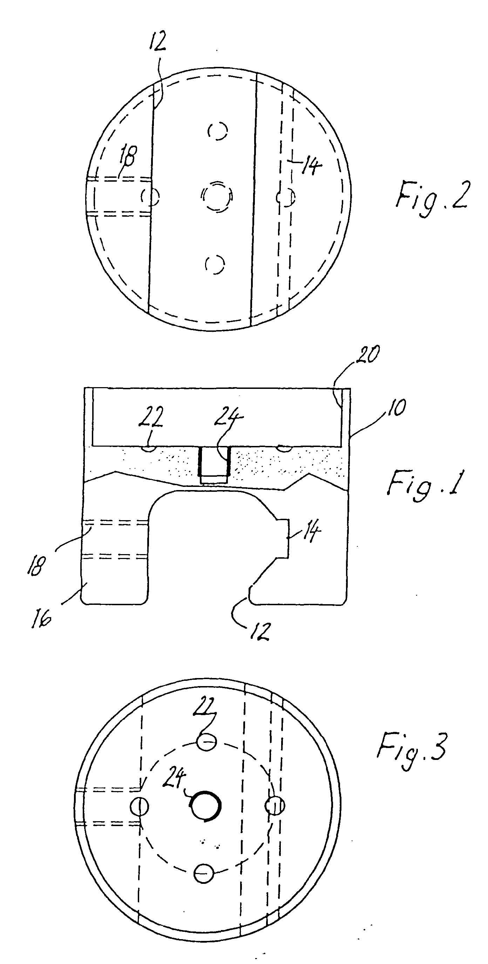

Zunächst soll auf die Fig. 1 bis 3 Bezug genommen werden. In diesen Figuren der Zeichnung ist ein insgesamt zylindrisches Klemmstück gezeigt. Fig. 1 zeigt einen Axialschnitt durch dieses Klemmstück und veranschaulicht an der unteren Stirnseite des Klemmstücks in Fig. 1 einen durchgehenden, den zylindrischen Korpus vollständig durchlaufenden Schlitz. Dieser Schlitz dient zur Aufnahme eines Stangenprofils, an dem die erfindungsgemäße Klemme befestigt werden soll.

Zur sicheren Festlegung der Klemme an dem Stangenprofil weist die in Fig. 1 rechte Innenwand des Schlitzes ein keilförmig zusammenlaufendes Profil mit einem rechteckigen Abschluss 14 im Scheitelpunkt auf. In der anderen, die Nut 12 begrenzenden seitlichen Wange 16 befindet sich eine Gewindebohrung 18, die zur Aufnahme einer nicht dargestellten Klemmschraube dient. Mit dieser Klemmschraube kann ein nicht dargestelltes, in der Nut 12 befindliches Stangenprofil gegen die rechte Innenfläche der Nut gedrückt und in dem keilförmig zusammenlaufenden Scheitelbereich festgelegt werden. Diese Art des Festklemmens von Geräteklemmen an Stangenprofilen ist an sich bekannt und soll hier daher nicht weiter erläutert werden.

Der zylindrische Korpus des Klemmstücks 10 weist auf der in Fig. 1 oben liegenden Stirnseite eine konzentrische Eindrehung 20 auf. In der Bodenfläche dieser Eindrehung befinden sich auf einem Kreis um jeweils 90° versetzt insgesamt vier Kugelmulden 22. Im Zentrum des durch die Kugelmulden 22 gebildeten Kreises und damit im Mittelpunkt der Bodenfläche der Eindrehung 20 liegt eine Gewindebohrung 24.

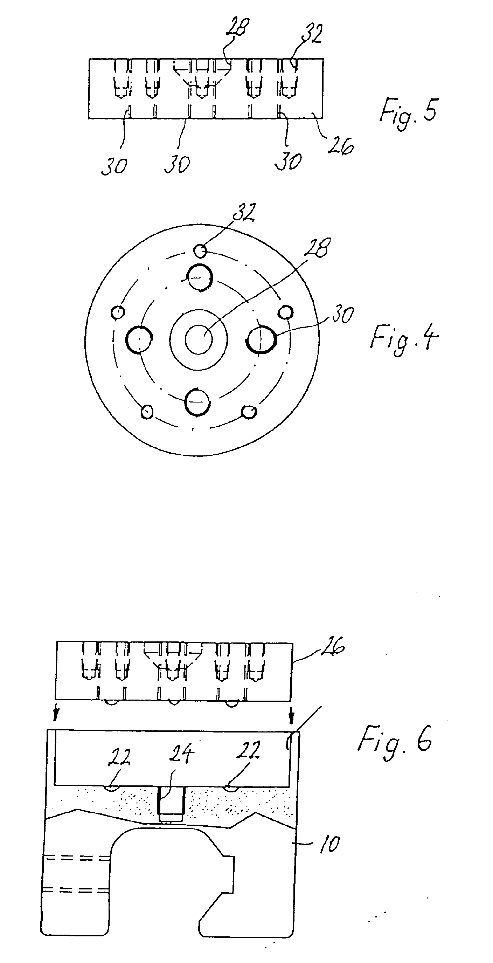

Wie erwähnt, dient die Eindrehung 20 zur Aufnahme eines Geräteträgers. Ein derartiger Geräteträger 26 ist gemäß Fig. 4 und 5 als kreisförmige Scheibe mit einem Durchmesser entsprechend den Innenmaßen der Eindrehung 20 ausgebildet. Der kreisscheibenförmige Geräteträger 26 weist eine konzentrische Bohrung 28 für die Aufnahme einer Schraube auf, die in der Zeichnung nicht dargestellt ist, jedoch zum Eindrehen in die Gewindebohrung 24 am Boden der Eindrehung 20 des Klemmstücks dient. In einem Kreis um die Bohrung 28 herum befinden sich vier Gewindebohrungen 30 in gleichmäßigem Winkelabstand von 90°, die die Aufnahme von nicht dargestellten Druckstücken mit federnd abgestützten Rastkugeln ermöglichen, die auf der unteren Oberfläche des Geräteträgers 26 austreten, wie in Fig. 6 angedeutet ist. Ferner befinden sich in einem weiteren Kreis um die Bohrung 28 herum Befestigungsbohrungen 30 zur Anbringung von Gerät.

Ein Geräteträger 26 gemäß Fig. 4 und 5 wird in der in Fig. 6 gezeigten Weise mit einem Klemmstück 10 zusammengefügt. In die Gewindebohrung 24 des Klemmstücks wird eine Schraube eingedreht, die den Geräteträger 26 gegen das Klemmstück 10 vorspannt. Die an der Unterseite des Geräteträgers 26 austretenden, nicht bezeichneten Rastkugeln treten bei geeigneter Winkelstellung in die Kugelmulden 22 am Boden der Eindrehung 20 ein. Beim Drehen des Geräteträgers 26 federn die Rastkugeln ein, so dass sie aus den Kugelmulden 22 austreten können. Bei einer Drehung von 90° rasten die Kugeln in die jeweils nächsten Kugelmulden ein.

Selbstverständlich können weitere Kugelmulden vorgesehen sein, so dass eine feinere Gradeinteilung möglich ist.

Insgesamt entsteht eine stabile und sicher einrastende Geräteklemme, mit der auch schwereres Gerät in der gewünschten Stellung gehalten werden kann.

## Patentansprüche

1. Geräteklemme mit einem Klemmstück (10) mit einem seitlich eintretenden Schlitz (12) zur Aufnahme eines Stangenprofils, an dem die Geräteklemme zu befestigen ist, und mit einer quer zum Schlitz gerichteten, in den Schlitz einschraubbaren Klemmschraube, **dadurch gekennzeichnet, dass** an dem Klemmstück ein drehbarer, in mehreren Winkelstellungen verrastbarer Geräteträger (26) angebracht ist.

2. Geräteklemme nach Anspruch 1, **dadurch gekennzeichnet, dass** der Geräteträger (26) in Winkelschritten von 90° verrastbar ist.

3. Geräteklemme nach Anspruch 1 oder 2, **dadurch gekennzeichnet, dass** die Verrastung des Geräteträgers am Klemmstück mit Hilfe von Federn vorgespannten Rastkugeln erfolgt, die in Kugelmulden an der Aufnahmefläche des Klemmstücks einrasten.

4. Geräteklemme nach einem der Ansprüche 1 bis 3, **dadurch gekennzeichnet, dass** das Klemmstück (10) auf der dem Schlitz gegenüberliegenden Seite eine Eindrehung (20) aufweist, in der der kreisscheibenförmige Geräteträger (26) angeordnet ist.

5. Geräteklemme nach Anspruch 4, **dadurch gekennzeichnet, dass** der Schlitz (12) von einer Stirnseite und die Eindrehung (20) von der anderen Stimseite in das insgesamt zylindrische Klemmstück (10) eintritt.
